# EUROPÄISCHE PATENTSCHRIFT

(11) **EP 2 049 782 B1**
(45) Veröffentlichungstag und Bekanntmachung des Hinweises auf die Patenterteilung: **20.01.2010**
(21) Anmeldenummer: 07788024.3
(22) Anmeldetag: 30.07.2007
(51) Int. Cl.: F02D 35/02, F02D 41/20, G01L 23/10

(54) **VERFAHREN UND VORRICHTUNG ZUR BESTIMMUNG EINES DRUCKS IM BRENNRAUM EINER BRENNKRAFTMASCHINE**
METHOD AND DEVICE FOR DETERMINING A PRESSURE IN THE COMBUSTION CHAMBER OF AN INTERNAL COMBUSTION ENGINE
PROCÉDÉ ET DISPOSITIF DE DÉTERMINATION D'UNE PRESSION DANS LA CHAMBRE DE COMBUSTION D'UN MOTEUR À COMBUSTION

(30) Priorität: 09.08.2006 DE 102006037235
(43) Veröffentlichungstag der Anmeldung: 22.04.2009
(73) Patentinhaber: SIEMENS AKTIENGESELLSCHAFT, 80333 München (DE)
(72) Erfinder: BACHMAIER, Georg, 80538 München (DE); GERLICH, Matthias, 80333 München (DE); HENNIG, Oliver, 81543 München (DE); MOCK, Randolf, 85662 Hohenbrunn (DE); TUMP, Christian, 80469 München (DE)
(86) Internationale Anmeldenummer: PCT/EP2007/057817
(87) Internationale Veröffentlichungsnummer: WO 2008/017602

(56) Entgegenhaltungen:
- EP-A- 1 500 879
- DE-A1- 10 127 932
- DE-A1- 19 622 651
- DE-A1-102004 044 138
- DE-A1-102005 016 462
- US-A- 5 747 677
- US-A1- 2006 027 013
- US-A1- 2006 123 887

## Beschreibung

Die vorliegende Erfindung betrifft ein Verfahren und eine Vorrichtung zur Bestimmung eines Drucks im Brennraum einer Brennkraftmaschine, insbesondere eines Kraftfahrzeugs.

Zunehmend hohe Anforderungen an Verbrauch und Abgasemission von Kraftfahrzeug-Brennkraftmaschinen erfordern eine zunehmend verbesserte Steuerung der Brennkraftmaschine. Eine Optimierung des Verbrennungsverlaufs im Brennraum der Brennkraftmaschine kann durch eine möglichst genaue Anpassung des tatsächlichen Verbrennungsverlaufs an ein Modell erzielt werden. Dazu ist es notwendig, möglichst genaue Informationen über den Zustand des Verbrennungsverlaufs zu haben. Von zentraler Bedeutung ist die Information über den Verlauf des Brennraum-Drucks in jedem Brennkraftmaschinen-Zylinder, da aus dem Zylinderdruck auf den Verbrennungsverlauf geschlossen werden kann.

Eine herkömmliche Vorrichtung zur Bestimmung des Brennraum-Drucks ist z.B. in der Druckschrift DE 4001475 A1 beschrieben. Dort werden Quarzdruckaufnehmer verwendet, die an geeigneten Stellen in der Brennkraftmaschine eingebaut sind und Verbindung zum Brennraum haben. Quarzdruckaufnehmer sind jedoch besonders bei hohen Beanspruchungen störanfällig und liefern aufgrund von Vibrationen der Brennkraftmaschine verfälschte Druckwerte. Bei Brennkraftmaschinen mit vier oder sogar fünf Ventilen pro Zylinder ist es außerdem sehr schwierig, eine zusätzliche Öffnung für einen Druckaufnehmer zu schaffen. Zudem bedeuten zusätzliche Bauteile zusätzliches Gewicht und zusätzlichen Bauraum, was einen verringerten Verbrauch verhindert.

Eine andere herkömmliche Vorrichtung zur Bestimmung des Brennraum-Drucks verwendet zur Vermeidung dieser Nachteile bereits vorhandene Bauteile, wie z.B piezoelektrische Einspritzventile (DE 101 27 932), Zündkerzen, die entsprechend modifiziert sind, um den Brennraumdruck zu erfassen. So werden beispielsweise piezoelektrische Unterlegscheiben unter Zündkerzen verwendet, welche die Vorspannkraft der Zündkerzen aufgrund deren Entlastung durch den Brennraumdruck messen. Andere Zündkerzen wiederum werden mit kleinen Bohrungen versehen, durch die die Verbrennungsgase einen im Innern der Zündkerzen befindlichen Drucksensor mit Druck beaufschlagen.

Jedoch besteht auch bei dieser Lösung der Nachteil, dass die gemessenen Druckwerte aufgrund von störenden Effekten wie z.B. Vibrationen der Brennkraftmaschine nur verfälschte Druckwerte liefern und so eine optimierte Steuerung der Brennkraftmaschine erschweren oder sogar unmöglich machen.

Es ist deshalb eine Aufgabe der vorliegenden Erfindung, ein Verfahren und eine Vorrichtung vorzuschlagen, um die Nachteile des Standes der Technik zu umgehen.

Diese Aufgabe wird durch die Merkmale des Verfahrensanspruchs 1 bzw. des Vorrichtungsanspruchs 8 gelöst.

Hierzu schlägt die Erfindung ein Verfahren zur Bestimmung eines Drucks im Brennraum einer Brennkraftmaschine vor, insbesondere eines Kraftfahrzeugs, umfassend ein in den Brennraum der Brennkraftmaschine ragendes Einspritzventil mit einem piezoelektrischen Aktor zum Betätigen einer Einspritznadel, die eine Einspritzöffnung des Einspritzventils öffnet oder schließt, eine in den Brennraum der Brennkraftmaschine ragende Zündvorrichtung, ein mit dem Aktor und der Zündvorrichtung in Verbindung stehendes Steuergerät, wobei das Verfahren folgende Schritte umfasst: (i) Messen einer Impedanz des Brennraum-Fluids mittels der Zündvorrichtung; (ii) Erfassen eines im Brennraum herrschenden Drucks des Fluids mittels elektrischer Signale des piezoelektrischen Aktors; und (iii) Ermitteln eines korrigierten Druckwerts unter Berücksichtigung des gemessenen Impedanzwerts.

Für die vorliegende Erfindung wird zum einen ausgenutzt, dass die Zündvorrichtung wie z.B. eine Zündkerze nach erfolgter Zündung des Kraftstoff-Luft-Gemisches unmittelbar Informationen über den Verbrennungsvorgang liefert, da sich bei der Verbrennung des Kraftstoff-Luft-Gemisches die elektrische Leitfähigkeit oder Impedanz σ in Abhängigkeit von der Konzentration n und Beweglichkeit p leitfähiger Ionen im Verbrennungsgas während der Dauer der chemischen Reaktion ändert. Die elektrische Impedanz σ wird dabei nach folgender Gleichung gemessen: σ = *n*×µ×*q*. Hierbei bezeichnet q die Ladung der Ionen.

Zum anderen wird für die Erfindung ausgenutzt, dass das Einspritzventil mittels des piezoelektrischen Aktors den Brennraumdruck detektieren kann.

Der Grundgedanke der vorliegenden Erfindung besteht nun darin, dass durch die Berücksichtigung des gemessenen Impedanzwerts störende Effekte bei der Erfassung des im Brennraum herrschenden Drucks herauskorrigiert werden können, um so einen "echten" Druckwert zu ermitteln. Diese störenden Effekte können z.B., wie oben bereits dargelegt wurde, Vibrationen der Brennkraftmaschine sein, die sich der Druckwertmessung überlagern.

In gleicher Weise können auch die gemessenen Impedanzwerte von störenden Effekten überlagert sein, wobei aber durch die Kombination von gemessenen Impedanzwerten und erfassten Druckwerten diese störenden Effekte quasi herausgemittelt werden können.

Um die Qualität der Ermittlung des korrigierten Druckwertes zu verbessern, ist es von Vorteil, einen oder mehrere weitere Brennkraftmaschinen-Zustandsparameter zu berücksichtigen. So kann z.B. ein Kurbelwellen-Betriebswert miterfasst werden, der die Umdrehungsgeschwindigkeit der Kurbelwelle widergibt. Ebenso kann ein Luftmassenwert berücksichtigt werden, der die von der Brennkraftmaschine angesaugte Luftmasse widergibt.

In weiterer Ausgestaltung der Erfindung kann die Temperatur der Brennkraftmaschine berücksichtigt werden, wobei die Temperatur an verschiedenen Orten der Brennkraftmaschine gemessen werden kann. Des Weiteren kann auch ein Brennraum-externer Druck gemessen werden, wie z.B. der Druck des Common-Rail-Systems. Dabei gilt, dass die Qualität des ermittelten Druckwerts umso besser wird, je mehr Parameterwerte gemessen werden und in die Druckwertermittlung einfliessen.

Ein weiterer Vorteil ist, dass Brennkraftmaschinen-Komponenten zur Erfassung der oben genannten Werte bereits an der Brennkraftmaschine vorhanden sind und nicht erst zusätzlich eingebaut werden müssen.

In noch weiterer Ausgestaltung der Erfindung wird bei der Ermittlung des korrigierten Druckwerts zusätzlich ein thermodynamisch-chemisches Modell des Brennraum-Drucks berücksichtigt, wobei dieses thermodynamisch-chemische Modell in dem Steuergerät abgelegt ist. Dabei werden die gemessenen Werte mit den entsprechenden aus dem Modell errechneten Werten verglichen, und aus dem Ergebnis des Vergleichs entsprechende Korrekturgrößen für den zu erfassenden Druckwert ermittelt. Der Vorteil ist, dass ein thermodynamisch-chemische Modell beliebig an bestimmte Vorgaben angepasst werden kann, und somit die realen Betriebszustände der Brennkraftmaschine durch den Vergleich der gemessenen Werte mit dem Modell, abhängig von der Anzahl der gemessenen Werte, an das Modell angepasst werden können.

Werden die Impedanzwerte und/oder Druckwerte im Schubbetrieb der Brennkraftmaschine gemessen bzw. erfasst, dann können diese Werte, da in den Zylinderbrennräumen dann reine Druckänderungen ohne chemische Umsetzungsprozesse ablaufen, als sogenannte Stützstellen des Modells benutzt werden, beispielsweise für eine Absolut-Kalibration des Druckwertes oder zur Korrektur von Stör-Effekten.

Nachfolgend wird die Erfindung anhand von Figuren näher erläutert. Hierbei zeigt:
Figur 1 eine schematische Darstellung einer erfindungsgemäßen Vorrichtung zur Bestimmung eines Drucks im Brennraum einer Brennkraftmaschine;
Figur 2 eine Detailansicht der Darstellung in Figur 1;
Figur 3 ein Flussdiagramm eines erfindungsgemäßen Verfahrens zur Bestimmung eines Drucks im Brennraum einer Brennkraftmaschine; und
Figur 4 ein Flussdiagramm einer weiteren Ausführungsform eines erfindungsgemäßen Verfahrens zur Bestimmung eines Drucks im Brennraum einer Brennkraftmaschine.

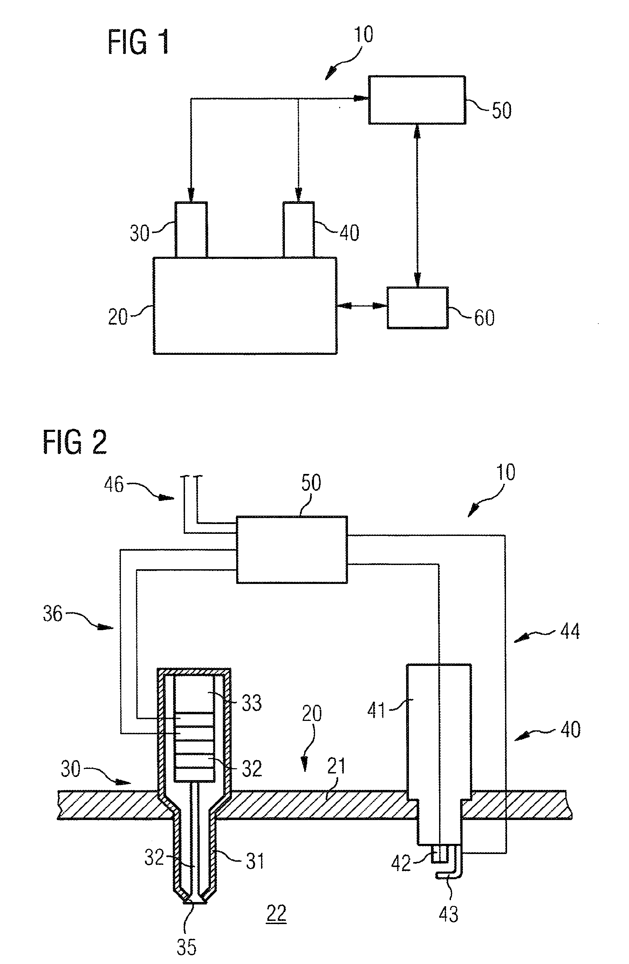

Figur 1 zeigt schematisch eine Vorrichtung 10, die eine Brennkraftmaschine 20 mit einem daran angebrachten Einspritzventil 30 und einer Zündvorrichtung 40 umfasst, sowie ein Steuergerät 50, das sowohl mit Einspritzventil 30 als auch Zündvorrichtung 40 verbunden ist. Bezugszeichen 60 bezeichnet mehrere Sensoren, die an der Brennkraftmaschine 20 angebracht sind, die die von der Brennkraftmaschine 20 angesaugte Luftmasse, die Temperatur der Brennkraftmaschine 20, die Umdrehungsgeschwindigkeit der Kurbelwelle und den Druck in der (hier nicht dargestellten) Kraftstoffversorgung des Einspritzventils 30 misst. Es sind allerdings auch weitere Brennraum-externe Sensoren denkbar, wie z.B. eine Lambda-Sonde im Abgasstrang. Diese Sensoren sind ebenfalls mit dem Steuergerät 50 verbunden.

Das Einspritzventil 30 ist derart angebracht, dass es in einen Zylinder-Brennraum der Brennkraftmaschine 20 ragt. Obwohl in Figur 1 nur ein Einspritzventil 30 dargestellt ist, ist es natürlich denkbar, dass an der Brennkraftmaschine 20 mehrere Einspritzventile angebracht sind, z.B. entsprechend der Anzahl an Zylindern der Brennkraftmaschine. Aus Gründen der Übersichtlichkeit ist hier die Versorgung des Einspritzventils 30 mit Kraftstoff nicht dargestellt. Denkbar ist eine herkömmliche Common-Rail-Anordnung.

Ebenso ist auch vorstellbar, dass mehrere Zündvorrichtungen an der Brennkraftmaschine 20 angebracht sind, z.B. entsprechend der Zylinderzahl. Im dargestellten Beispiel ist die Zündvorrichtung 40 eine herkömmliche Zündkerze.

Einspritzventil 30 und Zündkerze 40 sind mit einem Steuergerät 50 verbunden, welches die von Einspritzventil 30 und Zündvorrichtung 40 aufgenommenen Werte verarbeitet.

Figur 2 zeigt eine Ausschnittsvergrößerung der Vorrichtung 10 aus Figur 1. Dabei ist zu erkennen, dass das Einspritzventil 30 in einer Wandung 21 der Brennkraftmaschine 20 angeordnet ist und dass das Einspritzventil 30 mit einem Ende in einen Brennraum 22 der Brennkraftmaschine 20 ragt.

Der Aufbau eines Einspritzventils ist an sich bekannt, es soll hier nur kurz noch mal darauf eingegangen werden: Das Einspritzventil 30 weist ein Gehäuse 31 auf, in dem ein piezoelektrischer Aktor 32 angeordnet ist. An einem Ende des Aktors 32 ist eine Einspritzventilnadel 34 angeordnet, die eine Öffnung 35 des Gehäuses 31 schließt bzw. öffnet, und zwar durch Anlegen einer Spannung an den Aktor 32. An seinem anderen Ende weist der Aktor 32 eine hydraulische Kompensiereinheit 33, die auch an sich bekannt ist. Die Kompensiereinheit 33 dient dazu, Längenänderungen des Aktors 32 aufgrund von Temperaturschwankungen auszugleichen, damit die Öffnung 35 nicht ungewollt geöffnet wird.

Der Aktor 32 ist im dargestellten Beispiel als mehrschichtiger Aktor dargestellt. Die Ansteuerung des Aktors 32 erfolgt über Zuleitungen 36, die den Aktor 32 mit dem Steuergerät 50 verbinden.

Der Aufbau der Zündkerze 40 ist ebenfalls an sich bekannt und soll nicht weiter beschrieben werden. Eine Mittelelektrode 42 und eine Außenelektrode 43, die mit dem Gehäuse 41 der Zündkerze in elektrisch leitender Verbindung steht, sind jeweils über Zuleitungen 44 mit dem Steuergerät 50 verbunden.

Der im Brennraum 22 vorherrschende Druck wird über die Einspritzventilnadel 34 auf den Aktor 32 übertragen, wobei sich eine dem Druck proportionale Spannungsänderung über den gesamten Aktor 32 aufbaut. Diese Spannungsänderung wird als Druckwert an das Steuergerät 50 weitergeleitet. Dieser Druckwert ist jedoch in der Regel, wie oben bereits beschrieben, von Stör-Effekten wie Brennkraftmaschinen-Vibrationen beeinflusst, die den Druckwert verfälschen und somit eine falsche Grundlage für die Brennkraftmaschinensteuerung bilden.

Wie oben bereits beschrieben, wird nach erfolgter Zündung des Kraftstoff-Luft-Gemisches im Brennraum 22 durch die Zündvorrichtung 40 die elektrische Leitfähigkeit oder Impedanz σ in Abhängigkeit von der Konzentration n und Beweglichkeit p leitfähiger Ionen im Verbrennungsgas während der Dauer der chemischen Reaktion nach der Gleichung σ = *n*×µ×*q* gemessen, wobei q die Ladung der Ionen bezeichnet.

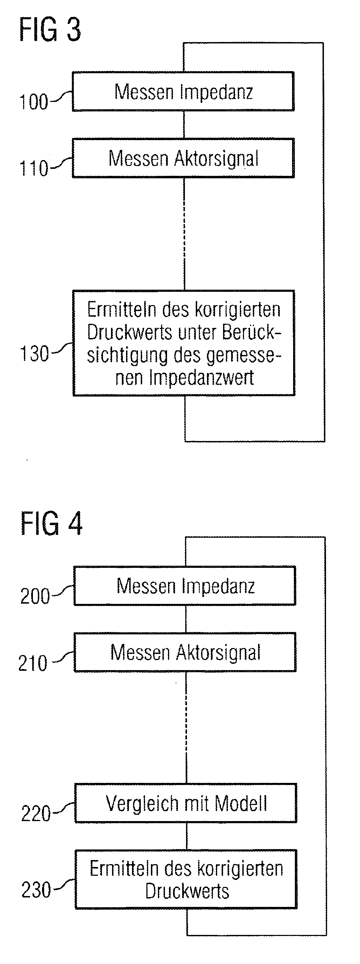

Die Ermittlung des korrigierten Druckwerts erfolgt nun nach dem in Figur 3 schematisch dargestellten Flussdiagramm.

Zunächst wird in einem Schritt 100 die Impedanz mittels Zündkerze 40 gemessen. In einem Schritt 110 wird das Aktorsignal gemessen, das vom Brennraumdruck abhängt. In einem Schritt 130 wird dann der korrigierte Druckwert unter Berücksichtigung des gemessenen Impedanzwerts ermittelt, der als Basis für die Steuerung der Brennkraftmaschine dient.

Zur Ermittlung des korrigierten Druckwertes sind beispielsweise Tabellen abgelegt, in denen abhängig von der gemessenen Impedanz und dem gemessenen Aktorsignal ein korrigierter Druckwert zugeordnet ist. Zudem können auch Formeln und/oder theoretische Modelle verwendet werden, um abhängig von der Impedanz und dem Aktorsignal einen korrigierten Druckwert zu liefern.

In einer weiteren in Figur 4 dargestellten Ausführungsform wird wiederum in einem Schritt 200 die Impedanz mittels Zündkerze 40 gemessen. In einem Schritt 210 wird das Aktorsignal gemessen, welches proportional zum Brennraumdruck ist. In einem Schritt 220 werden dann die gemessenen Werte im Steuergerät 50, in dem, im Unterschied zu der in Figur 3 dargestellten Ausführungsform, ein thermodynamisch-chemisches Modell der Brennraumdruck-Abläufe abgespeichert ist, verglichen. In einem letzten Schritt 230 wird dann aus dem Vergleich mit dem thermodynamisch-chemischen Modell der korrigierte Druckwert ermittelt, der dann wieder als Basis für die Steuerung der Brennkraftmaschine dient.

Die in Figur 3 und Figur 4 zwischen Schritt 110 und Schritt 120 bzw. zwischen Schritt 210 und Schritt 220 gestrichelt dargestellte Linie soll andeuten, dass von anderen Brennraumexternen Sensoren Signalwerte mit in die Ermittlung des korrigierten Druckwerts einfließen können. Dazu zeigt Figur 2 beispielhaft Zuleitungen 46, die die (in Figur 2 nicht dargestellten) Sensoren 60 (Figur 1) mit dem Steuergerät 50 verbinden.

Es ist auch vorstellbar, dass die Verrechnung der Signalwerte nicht auf der Basis eines wie oben beschriebenen Modells durchgeführt werden, sondern - z.B. mittels eines neuronalen Netzwerks - die Korrelation zwischen den unterschiedlichen Signalwerten mathematisch nachgebildet wird. Dazu messen so genannte Indizier-Aktoren den tatsächlichen Brennraumdruck, um so die Korrelation zwischen Einspritzventil-Aktorsignal und Zündkerzen-Signal mit dem tatsächlichen Druck zu bestimmen. Das System wird so "angelernt", und ist dann in der Lage, aus der so ermittelten Korrelation auf den tatsächlichen Drucksignalwert rückzuschliessen.

### Bezugszeichenliste

- 20: Brennkraftmaschine
- 21: Wandung
- 22: Brennraum
- 30: Einspritzventil
- 31: Gehäuse
- 32: piezoelektrischer Aktor
- 34: Einspritznadel
- 35: Einspritzöffnung
- 36: Zuleitungen
- 40: Zündvorrichtung
- 42: Mittelelektrode
- 43: Außenelektrode
- 44: Zuleitungen
- 50: Steuergerät
- 60: Sensoren

## Patentansprüche

1. Verfahren zur Bestimmung eines Drucks im Brennraum einer Brennkraftmaschine (20), insbesondere eines Kraftfahrzeugs, umfassend ein in den Brennraum der Brennkraftmaschine (20) ragendes Einspritzventil (30) mit einem piezoelektrischen Aktor (32) zum Betätigen einer Einspritznadel (34), die eine Einspritzöffnung (35) des Einspritzventils (30) öffnet oder schließt, eine in den Brennraum der Brennkraftmaschine (20) ragende Zündvorrichtung (40), wobei das Verfahren folgende Schritte umfasst:
(i) Messen (100) einer Impedanz des Brennraum-Fluids mittels der Zündvorrichtung (40);
(ii) Erfassen (110) eines im Brennraum herrschenden Drucks des Fluids mittels elektrischer Signale des piezoelektrischen Aktors (32); und
(iii) Ermitteln (130) eines korrigierten Druckwerts unter Berücksichtigung des gemessenen Impedanzwerts.

2. Verfahren nach Anspruch 1, wobei in Schritt (iii) zur Ermittlung des korrigierten Druckwerts zusätzlich ein gemessener Kurbelwellen-Betriebswert berücksichtigt wird.

3. Verfahren nach Anspruch 1 oder 2, wobei in Schritt (iii) zur Ermittlung des korrigierten Druckwerts zusätzlich ein gemessener Luftmassenwert berücksichtigt wird.

4. Verfahren nach einem der Ansprüche 1 bis 3, wobei in Schritt (iii) zur Ermittlung des korrigierten Druckwerts zusätzlich ein gemessener Temperaturwert berücksichtigt wird.

5. Verfahren nach einem der Ansprüche 1 bis 4, wobei in Schritt (iii) zur Ermittlung des korrigierten Druckwerts zusätzlich ein gemessener Brennraum-externer Druckwert berücksichtigt wird.

6. Verfahren nach einem der Ansprüche 1 bis 5, wobei in Schritt (iii) zur Ermittlung des korrigierten Druckwerts zusätzlich ein thermodynamisch-chemisches Modell des Brennraum-Drucks berücksichtigt wird.

7. Verfahren nach Anspruch 6, wobei im Schubbetrieb der Brennkraftmaschine die gemessenen Impedanzwerte und/oder die erfassten Druckwerte als Stützstellen für das thermodynamisch-chemische Modell benutzt werden.

8. Vorrichtung zur Bestimmung eines Drucks im Brennraum einer Brennkraftmaschine (20), insbesondere eines Kraftfahrzeugs, umfassend ein in den Brennraum der Brennkraftmaschine (20) ragendes Einspritzventil (30) mit einem piezoelektrischen Aktor (32) zum Betätigen einer Einspritznadel (34), die eine Einspritzöffnung (35) des Einspritzventils (30) öffnet oder schließt, eine in den Brennraum der Brennkraftmaschine ragende Zündvorrichtung (40), ein mit dem Aktor (32) und der Zündvorrichtung (40) in Verbindung stehendes Steuergerät (50), und wobei die Vorrichtung dazu ausgelegt ist, folgende Schritte auszuführen:
(i) Messen (100) einer Impedanz des Brennraum-Fluids mittels der Zündvorrichtung (40);
(ii) Erfassen (110) eines im Brennraum herrschenden Drucks des Fluids mittels elektrischer Signale des piezoelektrischen Aktors (32); und
(iii) Ermitteln (130) eines korrigierten Druckwerts unter Berücksichtigung des gemessenen Impedanzwerts.

9. Vorrichtung nach Anspruch 8, wobei die Vorrichtung dazu ausgelegt ist, dass in Schritt (iii) zur Ermittlung des korrigierten Druckwerts zusätzlich ein gemessener Kurbelwellen-Betriebswert berücksichtigt wird.

10. Vorrichtung nach Anspruch 8 oder 9, wobei die Vorrichtung dazu ausgelegt ist, dass in Schritt (iii) zur Ermittlung des korrigierten Druckwerts zusätzlich ein gemessener Luftmassenwert berücksichtigt wird.

11. Vorrichtung nach einem der Ansprüche 8 bis 10, wobei die Vorrichtung dazu ausgelegt ist, dass in Schritt (iii) zur Ermittlung des korrigierten Druckwerts zusätzlich ein gemessener Temperaturwert berücksichtigt wird.

12. Vorrichtung nach einem der Ansprüche 8 bis 11, wobei die Vorrichtung dazu ausgelegt ist, dass in Schritt (iii) zur Ermittlung des korrigierten Druckwerts zusätzlich ein gemessener Brennraum-externer Druckwert berücksichtigt wird.

13. Vorrichtung nach einem der Ansprüche 8 bis 12, wobei die Vorrichtung dazu ausgelegt ist, dass in Schritt (iii) zur Ermittlung des korrigierten Druckwerts zusätzlich ein thermodynamisch-chemisches Modell des Brennraum-Drucks berücksichtigt wird.

14. Vorrichtung nach Anspruch 13, wobei die Vorrichtung dazu ausgelegt ist, dass im Schubbetrieb der Brennkraftmaschine die gemessenen Impedanzwerte und/oder die erfassten Druckwerte als Stützstellen für das thermodynamisch-chemische Modell benutzt werden.

## Claims

1. Method for determining a pressure in the combustion chamber of an internal combustion engine (20), in particular of a motor vehicle, comprising an injection valve (30) projecting into the combustion chamber of the internal combustion engine (20) and having a piezoelectric actuator (32) for actuating an injection needle (34) which opens or closes an injection port (35) of the injection valve (30), an ignition device (40) projecting into the combustion chamber of the internal combustion engine (20), wherein the method comprises the following steps:
(i) measure (100) an impedance of the combustion chamber fluid by means of the ignition device (40);
(ii) record (110) a pressure of the fluid prevailing in the combustion chamber by means of electrical signals of the piezoelectric actuator (32); and
(iii) determine (130) a corrected pressure value taking into account the measured impedance value.

2. Method according to claim 1, wherein a measured crankshaft operating value is taken into account in addition in step (iii) for the purpose of determining the corrected pressure value.

3. Method according to claim 1 or 2, wherein a measured air mass value is taken into account in addition in step (iii) for the purpose of determining the corrected pressure value.

4. Method according to one of claims 1 to 3, wherein a measured temperature value is taken into account in addition in step (iii) for the purpose of determining the corrected pressure value.

5. Method according to one of claims 1 to 4, wherein a measured pressure value external to the combustion chamber is taken into account in addition in step (iii) for the purpose of determining the corrected pressure value.

6. Method according to one of claims 1 to 5, wherein a thermodynamic-chemical model of the combustion chamber pressure is taken into account in addition in step (iii) for the purpose of determining the corrected pressure value.

7. Method according to claim 6, wherein the measured impedance values and/or the recorded pressure values are used as sampling points for the thermodynamic-chemical model during overrun mode of the internal combustion engine.

8. Device for determining a pressure in the combustion chamber of an internal combustion engine (20), in particular of a motor vehicle, comprising an injection valve (30) projecting into the combustion chamber of the internal combustion engine (20) and having a piezoelectric actuator (32) for actuating an injection needle (34) which opens or closes an injection port (35) of the injection valve (30), an ignition device (40) projecting into the combustion chamber of the internal combustion engine (20), a control device (50) connected to the actuator (32) and the ignition device (40), and wherein the device is embodied to perform the following steps:
(i) measure (100) an impedance of the combustion chamber fluid by means of the ignition device (40);
(ii) record (110) a pressure of the fluid prevailing in the combustion chamber by means of electrical signals of the piezoelectric actuator (32); and
(iii) determine (130) a corrected pressure value taking into account the measured impedance value.

9. Device according to claim 8, wherein the device is embodied such that a measured crankshaft operating value is taken into account in addition in step (iii) for the purpose of determining the corrected pressure value.

10. Device according to claim 8 or 9, wherein the device is embodied such that a measured air mass value is taken into account in addition in step (iii) for the purpose of determining the corrected pressure value.

11. Device according to one of claims 8 to 10, wherein the device is embodied such that a measured temperature value is taken into account in addition in step (iii) for the purpose of determining the corrected pressure value.

12. Device according to one of claims 8 to 11, wherein the device is embodied such that a measured pressure value external to the combustion chamber is taken into account in addition in step (iii) for the purpose of determining the corrected pressure value.

13. Device according to one of claims 8 to 12, wherein the device is embodied such that a thermodynamic-chemical model of the combustion chamber pressure is taken into account in addition in step (iii) for the purpose of determining the corrected pressure value.

14. Device according to claim 13, wherein the device is embodied such that the measured impedance values and/or the recorded pressure values are used as sampling points for the thermodynamic-chemical model during overrun mode of the internal combustion engine.

## Revendications

1. Procédé pour déterminer une pression dans la chambre de combustion d'un moteur à combustion interne (20), en particulier d'un véhicule à moteur, comprenant une soupape d'injection (30) faisant saillie dans la chambre de combustion du moteur à combustion interne (20) avec un actionneur piézoélectrique (32) pour actionner une aiguille d'injection (34), qui ouvre ou ferme une ouverture d'injection (35) de la soupape d'injection (30), un dispositif d'allumage (40) faisant saillie dans la chambre de combustion du moteur à combustion interne (20), le procédé comprenant les étapes suivantes :
(i) la mesure (100) d'une impédance du fluide de la chambre de combustion au moyen du dispositif d'allumage (40) ;
(ii) la détection (110) d'une pression régnant dans la chambre de combustion du fluide au moyen de signaux électriques de l'actionneur piézoélectrique (32) ; ; et
(iii) la détermination (130) d'une valeur de pression corrigée en tenant compte de la valeur d'impédance mesurée.

2. Procédé selon la revendication 1, dans lequel il est tenu compte en outre d'une valeur de fonctionnement de vilebrequin mesurée, dans l'étape (iii) pour déterminer la valeur de pression corrigée.

3. Procédé selon la revendication 1 ou 2, dans lequel il est tenu compte en outre d'une valeur de masse d'air mesurée, dans l'étape (iii) pour déterminer la valeur de pression corrigée.

4. Procédé selon l'une quelconque des revendications 1 à 3, dans lequel il est tenu compte en outre d'une valeur de température mesurée, dans l'étape (iii) pour déterminer la valeur de pression corrigée.

5. Procédé selon l'une quelconque des revendications 1 à 4, dans lequel il est tenu compte en outre d'une valeur de pression mesurée externe à la chambre de combustion dans l'étape (iii) pour déterminer la valeur de pression corrigée.

6. Procédé selon l'une quelconque des revendications 1 à 5, dans lequel il est tenu compte en outre d'un modèle thermodynamique chimique de la pression de la chambre de combustion dans l'étape (iii) pour déterminer la valeur de pression corrigée.

7. Procédé selon la revendication 6, dans lequel dans le régime tournant libre du moteur à combustion interne, les valeurs d'impédance mesurées et/ou les valeurs de pression détectées sont exploitées comme points d'appui pour le modèle thermodynamique chimique.

8. Dispositif pour déterminer une pression dans la chambre de combustion d'un moteur à combustion interne (20), en particulier d'un véhicule à moteur, comprenant une soupape d'injection (30) faisant saillie dans la chambre de combustion du moteur à combustion interne (20) avec un actionneur piézoélectrique (32) pour actionner une aiguille d'injection (34), qui ouvre ou qui ferme une ouverture d'injection (35) de la soupape d'injection (30), un dispositif d'allumage (40) faisant saillie dans la chambre de combustion du moteur à combustion interne, un appareil de commande (50) se trouvant en communication avec l'actionneur (32) et le dispositif d'allumage (40), et dans lequel le dispositif est aménagé en outre pour réaliser les étapes suivantes :
(i) la mesure (100) d'une impédance du fluide de la chambre de combustion au moyen du dispositif d'allumage (40) ;
(ii) la détection (110) d'une pression de fluide régnant dans la chambre de combustion au moyen de signaux électriques de l'actionneur piézoélectrique (32) ; ; et
(iii) la détermination (130) d'une valeur de pression corrigée en tenant compte de la valeur d'impédance mesurée.

9. Dispositif selon la revendication 8, dans lequel le dispositif est aménagé pour tenir compte en outre d'une valeur de fonctionnement du vilebrequin mesurée, dans l'étape (iii) pour déterminer la valeur de pression corrigée.

10. Dispositif selon la revendication 8 ou 9, dans lequel le dispositif est aménagé pour tenir compte en outre d'une valeur de masse d'air mesurée, dans l'étape (iii) pour déterminer la valeur de pression corrigée.

11. Dispositif selon l'une quelconque des revendications 8 à 10, dans lequel le dispositif est aménagé pour tenir compte en outre d'une valeur de température mesurée, dans l'étape (iii) pour déterminer la valeur de pression corrigée.

12. Dispositif selon l'une quelconque des revendications 8 à 11, dans lequel le dispositif est aménagé pour tenir compte en outre d'une valeur de pression mesurée externe à la chambre de combustion, dans l'étape (iii) pour déterminer la valeur de pression corrigée.

13. Dispositif selon l'une quelconque des revendications 8 à 12, dans lequel le dispositif est aménagé pour tenir compte en outre d'un modèle thermodynamique chimique de la pression de la chambre de combustion, dans l'étape (iii) pour déterminer la valeur de pression corrigée.

14. Dispositif selon la revendication 13, dans lequel le dispositif est aménagé pour exploiter dans le régime tournant libre du moteur à combustion interne les valeurs d'impédance mesurées et/ou les valeurs de pression captées comme des points d'appui pour le modèle thermodynamique chimique.
